# EUROPEAN PATENT SPECIFICATION

(11) **EP 3 091 428 B1**
(45) Date of publication and mention of the grant of the patent: **31.07.2019**
(21) Application number: 13900378.4
(22) Date of filing: 26.12.2013
(51) Int. Cl.: G06F 3/0488, G06F 3/0482, G06F 3/0481, G06F 3/0484

(54) **TERMINAL OPERATING METHOD AND TERMINAL**
ENDGERÄTBETRIEBSVERFAHREN UND ENDGERÄT
PROCÉDÉ D'UTILISATION D'UN TERMINAL ET TERMINAL

(43) Date of publication of application: 09.11.2016
(73) Proprietor: Yulong Computer Telecommunication Scientific (Shenzhen) Co., Ltd., Shenzhen, Guangdong 518057 (CN)
(72) Inventor: JING, Xueying, Shenzhen Guangdong 518057 (CN); GUO, Deying, Shenzhen Guangdong 518057 (CN)
(74) Representative: Mewburn Ellis LLP
(86) International application number: PCT/CN2013/090602
(87) International publication number: WO 2015/096109

(56) References cited:
- CN-A- 102 331 877
- CN-A- 102 339 151
- CN-A- 103 186 343
- US-A1- 2009 094 562
- US-A1- 2009 293 007
- US-A1- 2012 304 133
- US-A1- 2013 191 791

## Description

### TECHNICAL FIELD

The present invention relates to the technical field of terminal operating technology, specifically, to a terminal operating method and a terminal.

### BACKGROUND

Currently, in order to get better visual experience, a terminal and the screen thereof have a larger and larger size, such that when the terminal is held by a user using one hand, generally operations may be performed only on a part of the screen area.

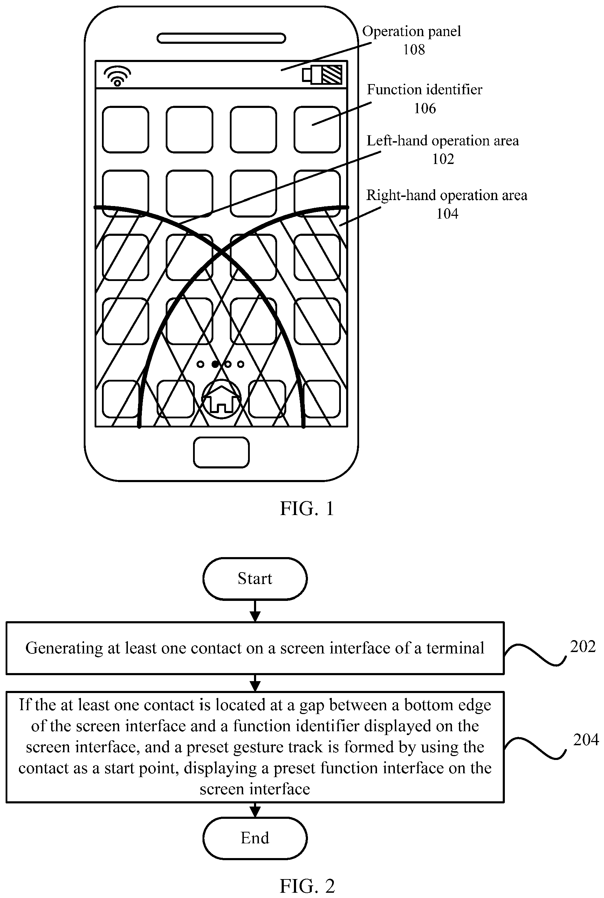

For example, as shown in Fig. 1, when the terminal is held by the user with the left hand or right hand, a left-hand operation area 102 is a sectorial area on the bottom left of the terminal screen, and a right-hand operation area 104 is a sectorial area on the bottom right of the terminal screen, accordingly. Thus, one-hand operations may be performed most readily on objects only within the intersection area of the left-hand operation area 102 and the right-hand operation area 104.

However, the intersection area has a quite limited size, and it is obviously impossible to arrange all the objects in this area, such that it is difficult to perform one-hand operations on objects displayed in other area of the terminal screen, for example a function identifier 106 or an operation panel 108 at the top, etc., which is disadvantageous for the user's operation experience on a large-screen.

Therefore, how to realize a one-hand operation mode applicable to the large-screen terminal becomes a technical problem to be solved urgently.

US 2009/0094562 A1 discloses a mobile terminal having a display module arranged to expose or hide a menu screen according to the dragging direction and distance of a touch input.

### SUMMARY

The present invention proposes a technical solution which can accurately recognize operations of a user by means of a gap or a slit on a screen interface of a terminal, and is more applicable to one-hand operations of a large-screen terminal.

According to one aspect of the invention, there is provided a terminal operating method as set out in claim 1. The method comprises: generating at least one contact on a screen interface of a terminal; if the at least one contact is located at a gap between a bottom edge of the screen interface and a function identifier displayed on the screen interface, and a preset gesture track is formed by using the contact as a start point, displaying a preset function interface on the screen interface.

In this technical solution, since both of the left-hand operation area and the right-hand operating area may cover the bottom edge of the screen interface of the terminal when the large-screen terminal is operated by the user using one hand, it is possible to be applicable to the user's operating process on the larger-screen terminal by recognizing the contact located at the bottom edge.

Meanwhile, by enabling the contact to be located at the gap between the bottom edge of the screen interface and the function identifier, it is possible to be applicable to the large-screen terminal, while facilitating being distinguished from other operation modes, such that the large-screen terminal may be accurately operated, thereby avoiding the occurrence of misoperation.

The function identifier may be a shortcut, a widget, or a display plug-in, etc., displayed on the screen interface of the terminal.

In the above-mentioned technical solution, the preset gesture track is located at slits between multiple function identifiers.

In this technical solution, in addition to the definition for the start location of the contact, the specific path of the gesture track is also defined, for example, located at slits between multiple function identifiers, such that on one hand the misoperation on the function identifier may be avoided; on the other hand, it is possible to ensure that the gesture track is effectively distinguished by determining the location of the slit, thereby avoiding the occurrence of misoperation, even if the gesture track has a shape identical with other functional gestures.

In the above-mentioned technical solution, it is preferable to further comprises: when the contact is moved along the preset gesture track, obtaining the movement distance of the contact or the ratio of the movement distance to the preset gesture track; on the basis of the movement distance and the ratio, displaying gradually the preset function interface on the screen interface.

In this technical solution, during the movement of the contact, the preset function interface is gradually displayed on the basis of the movement distance or the ratio. This is advantageous for dynamically combining the display process of the function interface and the movement process of the contact, as if the user "draws out" the function interface by a finger thereof, which is advantageous for improving the user's operation experience.

In the above-mentioned technical solution, preferably, the preset gesture track comprises at least one path corresponding to the at least one contact one to one.

In this technical solution, the contact and the path corresponding to the gesture track may be only one, thereby enabling the user to accurately operate one-handedly by the thumb of the hand holding the terminal. Of course, in order to further enhance the recognizability of the gesture and reduce the occurrence of misoperation, multiple contacts and multiple paths corresponding to the gesture tracks may be used simultaneously.

In the above-mentioned technical solution, preferably, multiple function identifiers are formed with multiple slits, and the terminal operating method further comprises: determining the slit at which the contact is located; and displaying, on the screen interface, the preset function interface corresponding to the slit at which the contact is located.

In this technical solution, multiple types of corresponding modes may be formed between a single contact or multiple contacts generated simultaneously and the slit or slits, such that by recognizing and distinguishing each corresponding mode, multiple types of function interfaces may be enabled respectively, thereby enabling the operation modes of the terminal to be more abundant.

In the above-mentioned technical solution, preferably, the gap includes multiple operation areas, and the terminal operating method further comprises: determining the operation area at which the contact is located; and displaying, on the screen interface, the preset function interface corresponding to the operation area.

In this technical solution, by partitioning the gap between the bottom edge of the screen interface and the function identifier, the function interface required to be enabled by the user may be accurately recognized on the basis of the area at which the contact is located, thereby avoiding the occurrence of misoperation.

In the above-mentioned technical solution, preferably, the preset function interfaces include a panel interface or a function option interface.

In this technical solution, as an embodiment, the enabled function interface may be a panel interface for displaying information messages, update messages, issue reminders or switch buttons for application function (for example, whether to enable an airplane mode, or, enable Bluetooth, etc.). Alternatively, the enabled function interface may be a function option interface including switch buttons or enablement interface buttons for other application function (for example, enablement interface for WLAN function or a settings interface) different from those included in the panel interface.

In the above-mentioned technical solution, preferably, the preset function interfaces may include a private application interface, an access interface for private applications, or a selection interface for private application function.

In this technical solution, as an embodiment, the gesture operation process of the present invention is relatively unique, and thus may be used as a gesture for calling private information, for example, calling the private application interface, etc.. Furthermore, it is possible to avoid displaying, on the screen interface of the terminal, the icons, etc., corresponding to the "private applications" which may be called by the gesture mode of the present invention, thereby being advantageous for improving the privacy and preventing other users from knowing the existence of the "private applications".

According to another aspect of the invention, there is provided a terminal as set out in claim 8. The terminal comprises: a contact generating unit for generating at least one contact on a screen interface of a terminal; a location determining unit for determining whether the at least one contact is located at a gap between a bottom edge of the screen interface and a function identifier displayed on the screen interface; a track determining unit for determining whether a preset gesture track is formed by using the contact as a start point; and a display controlling unit for displaying a preset function interface on the screen interface, if the location determining unit determines that the at least one contact is located at the gap between the bottom edge of the screen interface and the function identifier, and the track determining unit determines that the preset gesture track is formed by using the contact as a start point.

In this technical solution, since both of the left-hand operation area and the right-hand operating area may cover the bottom edge of the screen interface of the terminal when the large-screen terminal is operated by the user using one hand, it is possible to be applicable to the user's operating process on the larger-screen terminal by recognizing the contact located at the bottom edge.

Meanwhile, by enabling the contact to be located at the gap between the bottom edge of the screen interface and the function identifier, it is possible to be applicable to the large-screen terminal, while facilitating being distinguished from other operation modes, such that the large-screen terminal may be accurately operated, thereby avoiding the occurrence of misoperation.

The function identifier may be an application icon, a shortcut, a widget, or a display plug-in, etc., displayed on the screen interface of the terminal.

In the above-mentioned technical solution, the preset gesture track is located at slits between multiple function identifiers.

In this technical solution, in addition to the definition for the start location of the contact, the specific path of the gesture track is also defined, for example, located at slits between multiple function identifiers, such that on one hand the misoperation on the function identifier may be avoided; on the other hand, it is possible to ensure that the gesture track is effectively distinguished by determining the location of the slit, thereby avoiding the occurrence of misoperation, even if the gesture track has a shape identical with other functional gestures.

In the above-mentioned technical solution, it is preferable to further comprises a distance obtaining unit for, when the contact is moved along the preset gesture track, obtaining the movement distance of the contact or the ratio of the movement distance to the preset gesture track; the display controlling unit is for, on the basis of the movement distance and the ratio, displaying gradually the preset function interface on the screen interface.

In this technical solution, during the movement of the contact, the preset function interface is gradually displayed on the basis of the movement distance or the ratio. This is advantageous for dynamically combining the display process of the function interface and the movement process of the contact, as if the user "draws out" the function interface by a finger thereof, which is advantageous for improving the user's operation experience.

In the above-mentioned technical solution, preferably, the preset gesture track comprises at least one path corresponding to the at least one contact one to one.

In this technical solution, the contact and the path corresponding to the gesture track may be only one, thereby enabling the user to accurately operate one-handedly by the thumb of the hand holding the terminal. Of course, in order to further enhance the recognizability of the gesture and reduce the occurrence of misoperation, multiple contacts and multiple paths corresponding to the gesture tracks may be used simultaneously.

In the above-mentioned technical solution, it is preferable to further comprises a slit determining unit for, if the multiple function identifiers are formed with multiple slits, determining the slit at which the contact is located; the display controlling unit is for displaying, on the screen interface, the preset function interface corresponding to the slit at which the contact is located.

In this technical solution, multiple types of corresponding modes may be formed between a single contact or multiple contacts generated simultaneously and the slit or slits, such that by recognizing and distinguishing each corresponding mode, multiple types of function interfaces may be enabled respectively, thereby enabling the operation modes of the terminal to be more abundant.

In the above-mentioned technical solution, it is preferable to further comprises an area determining unit for, if the gap includes multiple operation areas, determining the operation area at which the contact is located; the display controlling unit is for displaying, on the screen interface, the preset function interface corresponding to the operation area.

In this technical solution, by partitioning the gap between the bottom edge of the screen interface and the function identifier, the function interface required to be enabled by the user may be accurately recognized on the basis of the area at which the contact is located, thereby avoiding the occurrence of misoperation.

In the above-mentioned technical solution, preferably, the preset function interfaces include a panel interface or a function option interface.

In this technical solution, as an embodiment, the enabled function interface may be a panel interface for displaying information messages, update messages, issue reminders or switch buttons for application function (for example, whether to enable an airplane mode, or, enable Bluetooth, etc.). Alternatively, the enabled function interface may be a function option interface including switch buttons or enablement interface buttons for other application function (for example, enablement interface for WLAN function or a settings interface) different from those included in the panel interface.

In the above-mentioned technical solution, preferably, the preset function interfaces may include a private application interface, an access interface for private applications, or a selection interface for private application function.

In this technical solution, as an embodiment, the gesture operation process of the present invention is relatively unique, and thus may be used as a gesture for calling private information, for example, calling the private application interface, etc.. Furthermore, it is possible to avoid displaying, on the screen interface of the terminal, the icons, etc., corresponding to the "private applications" which may be called by the gesture mode of the present invention, thereby being advantageous for improving the privacy and preventing other users from knowing the existence of the "private applications".

By the above-mentioned technical solution, operations of a user can be accurately recognized by means of a gap or a slit on a screen interface of a terminal, so that the technical solution is more applicable to one-hand operations of a large-screen terminal.

### BRIEF DESCRIPTION OF DRAWINGS

Fig. 1 shows a schematic diagram of a interface for operating a terminal in related art;
Fig. 2 shows a schematic flowchart of a terminal operating method according to an embodiment of the present invention;
Figs. 3 to 8 shows a schematic diagram of a interface for operating a terminal according to an embodiment of the present invention;
Fig. 9 shows a schematic block diagram of a terminal according to an embodiment of the present invention.

### DETAILED DESCRIPTION

The present invention is further described in detail hereinafter with reference to the drawings and the embodiments, in order to more fully understand the above-mentioned purposes, features and advantages of the present invention. It should be noted that, when not conflicting, the embodiments of the present application and features in the embodiments could be combined mutually.

A lot of details are set forth in the below description so as to fully understand the present invention, however, the present invention is only defined by the appended claims. Embodiments which do not fall within the scope of the claims do not describe part of the invention.

Fig. 2 shows a schematic flowchart of a terminal operating method according to an embodiment of the present invention.

As shown Fig. 2, a terminal operating method according to an embodiment of the present invention, comprises:
Step 202: at least one contact is generated on a screen interface of a terminal;
Step 204: if the at least one contact is located at a gap between a bottom edge of the screen interface and a function identifier displayed on the screen interface, and a preset gesture track is formed by using the contact as a start point, a preset function interface is displayed on the screen interface.

In this technical solution, since both of the left-hand operation area and the right-hand operating area may cover the bottom edge of the screen interface of the terminal when the large-screen terminal is operated by the user using one hand, it is possible to be applicable to the user's operating process on the larger-screen terminal by recognizing the contact located at the bottom edge.

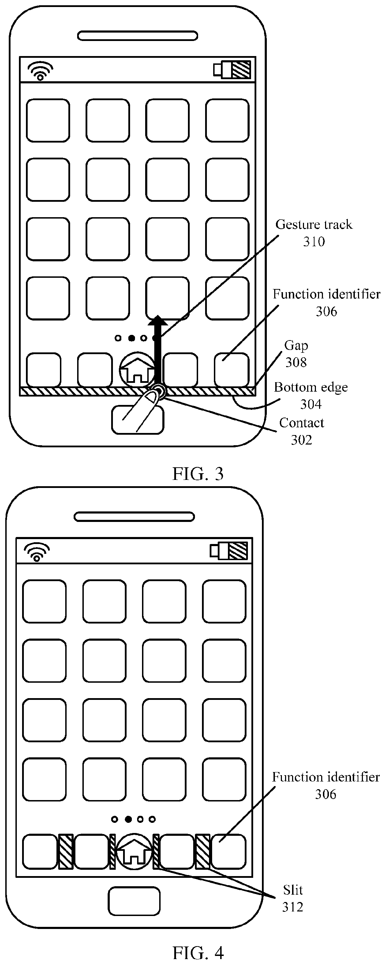

Specifically, as shown in Fig. 3, when the contact 302 is formed on the screen interface of the terminal, if the contact 302 is located at the gap 308 between the bottom edge 304 of the screen interface and the function identifier 306, and the preset gesture track 310 is formed, it is determined that a terminal operating solution according to the present invention is required to be performed, so as to display the preset function interface (not shown) on the screen interface.

By enabling the contact 302 to be located at the gap 308 between the bottom edge 304 of the screen interface and the function identifier 306, it is possible to be applicable to the large-screen terminal, while facilitating being distinguished from other operation modes, such that the large-screen terminal may be accurately operated, thereby avoiding the occurrence of misoperation.

Although the function identifier 306 as shown in Fig. 3 is an application icon, in fact, obviously, it may be a shortcut, a widget, or a display plug-in, etc., displayed on the screen interface of the terminal.

In addition to the location determination for the contact 302, the location of the gesture track 310 may also be defined. For example, as a more preferable embodiment, the preset gesture track 310 may be located at slits 312 between multiple function identifiers 306 as shown in Fig. 4.

In this technical solution, in addition to the definition for the start location of the contact 302, the specific path of the gesture track 310 may also be defined, for example, may be located at slits between multiple function identifiers 306, such that on one hand the misoperation on the function identifier 306 (for example, determined as a selection operation on the function identifier 306) may be avoided; on the other hand, it is possible to ensure that the gesture track is effectively distinguished by determining the location of the slit 312, thereby avoiding the occurrence of misoperation, even if the gesture track has a shape identical with other functional gestures.

In the above-mentioned technical solution, preferably, the preset gesture track 310 comprises at least one path corresponding to the at least one contact 302 one to one.

In this technical solution, the contact 302 and the path corresponding to the gesture track 310 may be only one, thereby enabling the user to accurately operate one-handedly by the thumb of the hand holding the terminal. Of course, in order to further enhance the recognizability of the gesture and reduce the occurrence of misoperation, multiple contacts 302 and multiple paths corresponding to the gesture tracks 310 may be used simultaneously.

Assuming that the contact 302 and the corresponding gesture track 310 constitute an operation command for the terminal, multiple different types of operation commands may be formed by changing the quantity of the contacts 302 and the corresponding gesture tracks 310, so as to achieve multiple types of different operation functions.

### Example one

Preferably, multiple function identifiers 306 are formed with multiple slits 312, and the terminal operating method further comprises: determining the slit 312 at which the contact 302 is located; and displaying, on the screen interface, the preset function interface corresponding to the slit 312 at which the contact 302 is located.

In this technical solution, multiple types of corresponding modes may be formed between a single contact 302 or multiple contacts 302 generated simultaneously and the slit or slits 312, such that by recognizing and distinguishing each corresponding mode, multiple types of function interfaces may be enabled respectively, thereby enabling the operation modes of the terminal to be more abundant.

### Example two

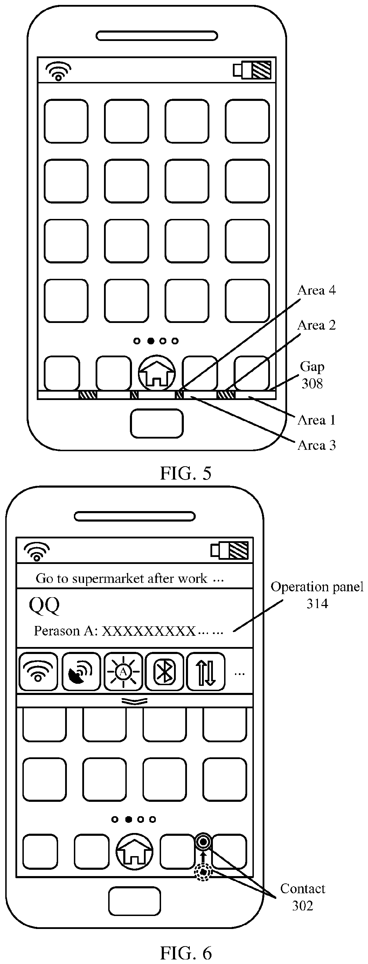

Preferably, the gap 308 includes multiple operation areas, for example area 1, area 2, area 3, and area 4, etc. as shown in Fig. 5. The terminal operating method further comprises: determining the operation area at which the contact 302 is located; and displaying, on the screen interface, the preset function interface corresponding to the operation area.

In this technical solution, by partitioning the gap 308 between the bottom edge 304 of the screen interface 304 and the function identifier 306, the function interface required to be enabled by the user may be accurately recognized on the basis of the area at which the contact 302 is located, thereby avoiding the occurrence of misoperation.

It should be noted that, according to the embodiment as shown in FIG. 5, the area 1 and area 3 corresponds to the function identifiers 306 in the vertical direction, while the area 2 and area 4 corresponds to the slits 312 between the function identifiers 306 in the vertical direction. In a preferable embodiment, in consideration of misoperating the application icons, the gesture track 310 is required to be located at the gap 312. Thus, the area 1, area 3, etc., may be incorporated into the area 2, area 4, etc., or the contacts 302 at the area 1, area 3, etc., may not be to be recognized. According to another preferable embodiment, on the basis of more control function, the location relationship between the gesture track 310 and the gap 312 may not be defined, and the area 1, area 3, etc., may be considered as areas equivalent to the area 2, area 4, etc., for determining the location of the contact 302.

In the above-mentioned technical solution, it is preferable to further comprises: when the contact 302 is moved along the preset gesture track 310, obtaining the movement distance of the contact 302 or the ratio of the movement distance to the preset gesture track 310; on the basis of the movement distance and the ratio, displaying gradually the preset function interface on the screen interface.

In this technical solution, during the movement of the contact 302, the preset function interface is gradually displayed on the basis of the movement distance or the ratio. This is advantageous for dynamically combining the display process of the function interface and the movement process of the contact 302, as if the user "draws out" the function interface by a finger thereof, which is advantageous for improving the user's operation experience.

Specifically, for example, the above-mentioned function interface may be an operation panel 314 as shown in Fig. 6. During the movement of the contact 302, the operation panel 314 may gradually decline from the top of the screen interface, and a relationship between the display process of the operation panel 314 and the movement process of the contact 302 is built.

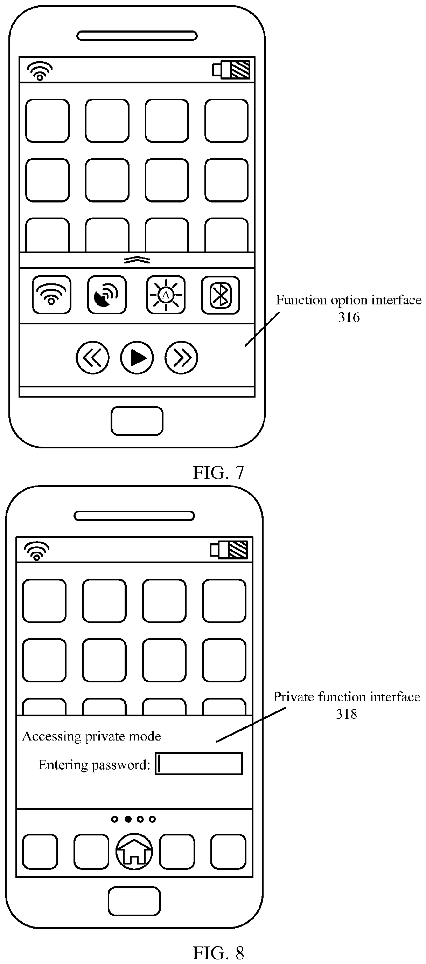

Of course, function interface may have multiple types, and the operation panel 314 is merely an embodiment thereof. For example, as another embodiment, a function option interface 316 is shown in Fig. 7, and may include switch buttons or enablement interface buttons for other application function (for example, enablement interface for WLAN function or a settings interface) different from those included in the panel interface 314.

Alternatively, as another embodiment of the present invention, the preset function interface may also be a private application interface, an access interface for private applications, or a selection interface for private application function. For example, as shown in Fig. 8, the preset function interface may be a private function interface 318.

In this technical solution, as an embodiment, the gesture operation process of the present invention is relatively unique, and thus may be used as a gesture for calling private information, for example, calling the private function interface 318, etc..

Furthermore, it is possible to avoid, displaying on the screen interface of the terminal, the icons, etc., corresponding to the "private applications" which may be called by the gesture mode of the present invention, thereby being advantageous for improving the privacy and preventing other users from knowing the existence of the "private applications".

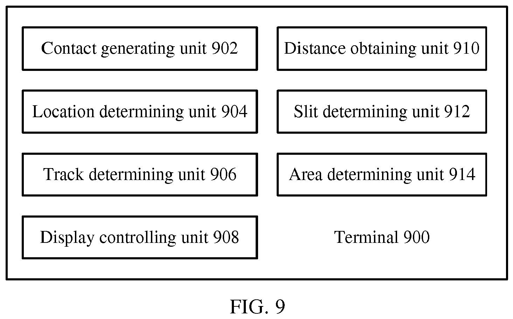

The present invention proposes a terminal having a functional module structure corresponding to the above-mentioned terminal operating method. Specifically, Fig. 9 shows a schematic block diagram of a terminal according to an embodiment of the present invention.

As shown in Fig. 9, a terminal 900 according to an embodiment of the present invention, comprises: a contact generating unit 902 for generating at least one contact on the screen interface of the terminal 900; a location determining unit 904 for determining whether the at least one contact is located at a gap between a bottom edge of the screen interface and a function identifier displayed on the screen interface; a track determining unit 906 for determining whether a preset gesture track is formed by using the contact as a start point; and a display controlling unit 908 for displaying a preset function interface on the screen interface, if the location determining unit 904 determines that the at least one contact is located at the gap between the bottom edge of the screen interface and the function identifier, and the track determining unit 906 determines that the preset gesture track is formed by using the contact as a start point.

In this technical solution, since both of the left-hand operation area and the right-hand operating area may cover the bottom edge of the screen interface of the terminal 900 when the large-screen terminal 900 is operated by the user using one hand, it is possible to be applicable to the user's operating process on the larger-screen terminal 900 by recognizing the contact located at the bottom edge.

Meanwhile, by enabling the contact to be located at the gap between the bottom edge of the screen interface and the function identifier, it is possible to be applicable to the large-screen terminal 900, while facilitating being distinguished from other operation modes, such that the large-screen terminal 900 may be accurately operated, thereby avoiding the occurrence of misoperation.

The function identifier may be an application icon, a shortcut, a widget, or a display plug-in, etc., displayed on the screen interface of the terminal 900.

In the above-mentioned technical solution, preferably, the preset gesture track is located at slits between multiple function identifiers.

In this technical solution, in addition to the definition for the start location of the contact, the specific path of the gesture track may also be defined, for example, may be located at slits between multiple function identifiers, such that on one hand the misoperation on the function identifier may be avoided; on the other hand, it is possible to ensure that the gesture track is effectively distinguished by determining the location of the slit, thereby avoiding the occurrence of misoperation, even if the gesture track has a shape identical with other functional gestures.

In the above-mentioned technical solution, it is preferable to further comprises a distance obtaining unit 910 for, when the contact is moved along the preset gesture track, obtaining the movement distance of the contact or the ratio of the movement distance to the preset gesture track; the display controlling unit 908 is for, on the basis of the movement distance and the ratio, displaying gradually the preset function interface on the screen interface.

In this technical solution, during the movement of the contact, the preset function interface is gradually displayed on the basis of the movement distance or the ratio. This is advantageous for dynamically combining the display process of the function interface and the movement process of the contact, as if the user "draws out" the function interface by a finger thereof, which is advantageous for improving the user's operation experience.

In the above-mentioned technical solution, preferably, the preset gesture track comprises at least one path corresponding to the at least one contact one to one.

In this technical solution, the contact and the path corresponding to the gesture track may be only one, thereby enabling the user to accurately operate one-handedly by the thumb of the hand holding the terminal 900. Of course, in order to further enhance the recognizability of the gesture and reduce the occurrence of misoperation, multiple contacts and multiple paths corresponding to the gesture tracks may be used simultaneously.

In the above-mentioned technical solution, it is preferable to further comprises a slit determining unit 912 for, if the multiple function identifiers are formed with multiple slits, determining the slit at which the contact is located; the display controlling unit 908 is for displaying, on the screen interface, the preset function interface corresponding to the slit at which the contact is located.

In this technical solution, multiple types of corresponding modes may be formed between a single contact or multiple contacts generated simultaneously and the slit or slits, such that by recognizing and distinguishing each corresponding mode, multiple types of function interfaces may be enabled respectively, thereby enabling the operation modes of the terminal 900 to be more abundant.

In the above-mentioned technical solution, it is preferable to further comprises an area determining unit 914 for, if the gap includes multiple operation areas, determining the operation area at which the contact is located; the display controlling unit 908 is for displaying, on the screen interface, the preset function interface corresponding to the operation area.

In this technical solution, by partitioning the gap between the bottom edge of the screen interface and the function identifier, the function interface required to be enabled by the user may be accurately recognized on the basis of the area at which the contact is located, thereby avoiding the occurrence of misoperation.

In the above-mentioned technical solution, preferably, the preset function interfaces include a panel interface or a function option interface.

In this technical solution, as an embodiment, the enabled function interface may be a panel interface for displaying information messages, update messages, issue reminders or switch buttons for application function (for example, whether to enable an airplane mode, or, enable Bluetooth, etc.). Alternatively, the enabled function interface may be a function option interface including switch buttons or enablement interface buttons for other application function (for example, enablement interface for WLAN function or a settings interface) different from those included in the panel interface.

In the above-mentioned technical solution, preferably, the preset function interfaces may include a private application interface, an access interface for private applications, or a selection interface for private application function.

In this technical solution, as an embodiment, the gesture operation process of the present invention is relatively unique, and thus may be used as a gesture for calling private information, for example, calling the private application interface, etc.. Furthermore, it is possible to avoid displaying, on the screen interface of the terminal, the icons, etc., corresponding to the "private applications" which may be called by the gesture mode of the present invention, thereby being advantageous for improving the privacy and preventing other users from knowing the existence of the "private applications".

The technical solution of the present invention is described in detail in conjunction with the accompanying drawings. The present invention proposes a terminal operating method and a terminal which can accurately recognize operations of a user by means of a gap or a slit on a screen interface of a terminal, and is more applicable to one-hand operations of a large-screen terminal.

According to an embodiment of the present invention, a program product stored in a non-volatile machine-readable medium for operating a terminal is provided. The program product comprises machine-executable codes for a computer system to execute the following steps: generating at least one contact on a screen interface of a terminal; if the at least one contact is located at a gap between a bottom edge of the screen interface and a function identifier displayed on the screen interface, and a preset gesture track is formed by using the contact as a start point, displaying a preset function interface on the screen interface.

According to an embodiment of the present invention, a non-volatile machine-readable medium, for storing a program product for operating a terminal, is further provided. The program product comprises machine-executable codes for a computer system to execute the following steps: generating at least one contact on a screen interface of a terminal; if the at least one contact is located at a gap between a bottom edge of the screen interface and a function identifier displayed on the screen interface, and a preset gesture track is formed by using the contact as a start point, displaying a preset function interface on the screen interface.

According to an embodiment of the present invention, a machine-readable program, for a machine to execute the terminal operating method according to any one of the above technical solutions, is provided.

According to an embodiment of the present invention, a storage medium, for storing a machine-readable program for a machine to execute the terminal operating method according to any one of the above technical solutions, is provided.

## Claims

1. A terminal operating method, comprising:
generating (202) at least one contact (302) on a screen interface of a terminal; and
displaying (204) a preset function interface on the screen interface,
**characterised in that**:
if the at least one contact is located at a gap (308) having multiple operation areas (102, 104) between a bottom edge (304) of the screen interface and a function identifier (306) displayed on the screen interface, and
if a preset gesture track (310) is formed from the contact as a start point through a slit (312) between multiple function identifiers displayed on the screen interface,
the preset function interface is displayed, wherein the preset function interface corresponds to either the slit through which the preset gesture track is formed or to the operation area from which the preset gesture track is started.

2. The terminal operating method according to claim 1, wherein the multiple function identifiers are in a row along a bottom part of the screen interface.

3. The terminal operating method according to claim 1, further comprising:
when the contact is moved along the preset gesture track, obtaining the movement distance of the contact or the ratio of the movement distance to the preset gesture track;
on the basis of the movement distance and the ratio, displaying gradually the preset function interface on the screen interface.

4. The terminal operating method according to claim 1, wherein the preset gesture track comprises at least one path corresponding to the at least one contact one to one.

5. The terminal operating method according to claim 1, wherein the preset function interface is a private application interface, an access interface for private applications, or a selection interface for private application function.

6. A terminal (900), comprising:
a contact generating unit (902) for generating at least one contact (302) on the screen interface of the terminal;
a location determining unit (904) for determining whether the at least one contact is located at a gap (308) having multiple operation areas (102, 104) between a bottom edge (304) of the screen interface and a function identifier (306) displayed on the screen interface;
a track determining unit (906) for determining whether a preset gesture track (310) is formed by using the contact as a start point; and
a display controlling unit (908) for displaying a preset function interface on the screen interface,
**characterised in that**:
the terminal (900) further comprises a slit determining unit (912) and an area determining unit (914) arranged such that:
if the location determining unit determines that the at least one contact is located at the gap between the bottom edge of the screen interface and the function identifier, and
if the track determining unit determines that the preset gesture track is formed from the contact as a start point through a slit (312) between multiple function identifiers displayed on the screen interface,
the display controlling unit is arranged to display the preset function interface, wherein the preset function interface corresponds to either the slit through which the preset gesture track is formed, as determined by the slit determining unit (912), or to the operation area from which the preset gesture track is started, as determined by the area determining unit (914).

7. The terminal according to claim 6, wherein the multiple function identifiers are in a row along a bottom part of the screen interface.

8. The terminal according to claim 6, further comprising a distance obtaining unit (910) for, when the contact is moved along the preset gesture track, obtaining the movement distance of the contact or the ratio of the movement distance to the preset gesture track;
wherein the display controlling unit is for, on the basis of the movement distance and the ratio, displaying gradually the preset function interface on the screen interface.

9. The terminal according to claim 6, wherein the preset gesture track comprises at least one path corresponding to the at least one contact one to one.

10. The terminal according to claim 6, wherein the preset function interface is a private application interface, an access interface for private applications, or a selection interface for private application function.

## Patentansprüche

1. Endgerätbetriebsverfahren, umfassend:
Erzeugen (202) zumindest einer Berührung (302) auf einer Bildschirmschnittstelle eines Endgeräts; und
Anzeigen (204) einer voreingestellten Funktionsschnittstelle auf der Bildschirmschnittstelle, **dadurch gekennzeichnet, dass**:
wenn die zumindest eine Berührung an einem Spalt (308) mit mehreren Betriebsbereichen (102, 104) zwischen einer Unterkante (304) der Bildschirmschnittstelle und einem Funktionserkennungszeichen (306) positioniert ist, das auf der Bildschirmschnittstelle angezeigt wird, und
wenn eine voreingestellte Gestenspur (310) von der Berührung als Startpunkt aus durch einen Schlitz (312) zwischen mehreren auf der Bildschirmschnittstelle angezeigten Funktionserkennungszeichen ausgebildet wird,
die voreingestellte Funktionsschnittstelle angezeigt wird, wobei die voreingestellte Funktionsschnittstelle entweder dem Schlitz, durch den die voreingestellte Gestenspur ausgebildet wird, oder dem Betriebsbereich, von dem die voreingestellte Gestenspur begonnen wird, entspricht.

2. Endgerätbetriebsverfahren nach Anspruch 1, wobei die mehreren Funktionserkennungszeichen in einer Zeile entlang einem unteren Teil der Bildschirmschnittstelle sind.

3. Endgerätbetriebsverfahren nach Anspruch 1, ferner umfassend:
wenn die Berührung entlang der voreingestellten Gestenspur bewegt wird, wobei der Bewegungsabstand der Berührung oder das Verhältnis des Bewegungsabstands zu der voreingestellten Gestenspur erhalten wird;
wobei auf der Basis des Bewegungsabstands und des Verhältnisses schrittweise die voreingestellte Funktionsschnittstelle auf der Bildschirmschnittstelle angezeigt wird.

4. Endgerätbetriebsverfahren nach Anspruch 1, wobei die voreingestellte Gestenspur zumindest einen Weg umfasst, der der zumindest einen Berührung eins zu eins entspricht.

5. Endgerätbetriebsverfahren nach Anspruch 1, wobei die voreingestellte Funktionsschnittstelle eine private Anwendungsschnittstelle, eine Zugangsschnittstelle für private Anwendungen oder eine Auswahlschnittstelle für eine private Anwendungsfunktion ist.

6. Endgerät (900), umfassend:
eine Berührungserzeugungseinheit (902) zum Erzeugen zumindest einer Berührung (302) auf der Bildschirmschnittstelle des Endgeräts;
eine Positionsbestimmungseinheit (904) zum Feststellen, ob die zumindest eine Berührung an einem Spalt (308) mit mehreren Betriebsbereichen (102, 104) zwischen einer Unterkante (304) der Bildschirmschnittstelle und einem auf der Bildschirmschnittstelle dargestellten Funktionserkennungszeichen (306) positioniert ist;
eine Spurbestimmungseinheit (906) zum Feststellen, ob eine voreingestellte Gestenspur (310) unter Verwendung der Berührung als Ausgangspunkt ausgebildet wird; und
eine Anzeigesteuereinheit (908) zum Anzeigen einer voreingestellten Funktionsschnittstelle auf der Bildschirmschnittstelle,
**dadurch gekennzeichnet, dass**
der Bildschirm (900) ferner eine Schlitzbestimmungseinheit (912) und eine Bereichbestimmungseinheit (914) umfasst, die so angeordnet ist, dass
wenn die Positionsbestimmungseinheit feststellt, dass die zumindest eine Berührung an dem Spalt zwischen der Unterkante der Bildschirmschnittstelle und dem Funktionserkennungszeichen positioniert ist, und
wenn die Spurbestimmungseinheit feststellt, dass die voreingestellte Gestenspur von der Berührung als Ausgangspunkt durch einen Schlitz (312) zwischen mehreren auf der Bildschirmschnittstelle dargestellten Funktionserkennungszeichen ausgebildet wird,
die Anzeigesteuereinheit ausgebildet ist, um die voreingestellte Funktionsschnittstelle anzuzeigen, wobei die voreingestellte Funktionsschnittstelle entweder dem Schlitz, durch den die voreingestellte Gestenspur ausgebildet wird, wie durch die Schlitzbestimmungseinheit (912) festgestellt wird, oder dem Betriebsbereich, von dem die voreingestellte Gestenspur begonnen wird, wie von der Bereichsbestimmungseinheit (914) festgestellt wird, entspricht.

7. Endgerät nach Anspruch 6, wobei die mehreren Funktionserkennungszeichen in einer Zeile entlang einem unteren Teil der Bildschirmschnittstelle vorliegen.

8. Endgerät nach Anspruch 6, das ferner eine Abstanderhaltungseinheit (910) umfasst, damit, wenn die Berührung entlang der voreingestellten Gestenspur bewegt wird, der Bewegungsabstand der Berührung oder das Verhältnis des Bewegungsabstands zu der voreingestellten Gestenspur erhalten wird;
wobei die Anzeigesteuereinheit dazu da ist, auf Basis des Bewegungsabstands und des Verhältnisses die voreingestellte Funktionsschnittstelle auf der Bildschirmschnittstelle graduell anzuzeigen.

9. Endgerät nach Anspruch 6, wobei die voreingestellte Gestenspur zumindest einen Weg umfasst, der der zumindest einen Berührung eins zu eins entspricht.

10. Endgerät nach Anspruch 6, wobei die voreingestellte Funktionsschnittstelle eine private Anwendungsschnittstelle, eine Zugangsschnittstelle für private Anwendungen oder eine Auswahlschnittstelle für eine private Anwendungsfunktion ist.

## Revendications

1. Procédé d'utilisation d'un terminal, comprenant :
la génération (202) d'au moins un contact (302) sur une interface à écran d'un terminal ;
et
l'affichage (204) d'une interface de fonction prédéfinie sur l'interface à écran,
**caractérisé en ce que** :
si le au moins un contact se trouve au niveau d'un espace (308) ayant plusieurs zones de fonctionnement (102, 104) entre un bord inférieur (304) de l'interface à écran et un identifiant de fonction (306) affiché sur l'interface à écran, et
si une trace de geste prédéfinie (310) est formée à partir du contact comme un point de départ par le biais d'une fente (312) entre plusieurs identifiants de fonctions affichés sur l'interface à écran,
l'interface de fonction prédéfinie est affichée, dans lequel l'interface de fonction prédéfinie correspond soit à la fente par le biais de laquelle la trace de geste prédéfinie est formée, soit à la zone de fonctionnement à partir de laquelle la trace de geste prédéfinie débute.

2. Procédé d'utilisation d'un terminal selon la revendication 1, dans lequel les identifiants de fonctions multiples se trouvent sur une ligne le long d'une partie inférieure de l'interface à écran.

3. Procédé d'utilisation d'un terminal selon la revendication 1, comprenant en outre :
lorsque le contact est déplacé le long de la trace de geste prédéfinie, l'obtention de la distance de déplacement du contact ou du rapport entre la distance de déplacement et la trace de geste prédéfinie ;
sur la base de la distance de déplacement et du rapport, l'affichage progressif de l'interface de fonction prédéfinie sur l'interface à écran.

4. Procédé d'utilisation d'un terminal selon la revendication 1, dans lequel la trace de geste prédéfinie comprend au moins un trajet qui correspond au au moins un contact, de manière biunivoque.

5. Procédé d'utilisation d'un terminal selon la revendication 1, dans lequel l'interface de fonction prédéfinie est une interface d'application privée, une interface d'accès destinée à des applications privées, ou une interface de sélection destinée à une fonction d'application privée.

6. Terminal (900), comprenant :
une unité de génération de contact (902) destinée à générer au moins un contact (302) sur l'interface à écran du terminal ;
une unité de détermination d'emplacement (904) destinée à déterminer si le au moins un contact se trouve au niveau d'un espace (308) ayant plusieurs zones de fonctionnement (102, 104) entre un bord inférieur (304) de l'interface à écran et un identifiant de fonction (306) affiché sur l'interface à écran ;
une unité de détermination de trace (906) destinée à déterminer si une trace de geste prédéfinie (310) est formée en utilisant le contact comme un point de départ ; et
une unité de contrôle d'affichage (908) destinée à afficher une interface de fonction prédéfinie sur l'interface à écran,
**caractérisé en ce que** :
le terminal (900) comprend en outre une unité de détermination de fente (912) et une unité de détermination de zone (914) prévues de sorte que :
si l'unité de détermination d'emplacement détermine que le au moins un contact se trouve au niveau d'un espace entrer le bord inférieur de l'interface à écran et l'identifiant de fonction, et
si l'unité de détermination de trace détermine que la trace de geste prédéfinie est formée à partir du contact comme un point de départ par le biais d'une fente (312) entre plusieurs identifiants de fonctions affichés sur l'interface à écran,
l'unité de contrôle d'affichage est prévue pour afficher l'interface de fonction prédéfinie, dans lequel l'interface de fonction prédéfinie correspond soit à la fente par le biais de laquelle la trace de geste prédéfinie est formée, comme cela est déterminé par l'unité de détermination de fente (912), soit à la zone de fonctionnement à partir de laquelle la trace de geste prédéfinie débute, comme cela est déterminé par l'unité de détermination de zone (914).

7. Terminal selon la revendication 6, dans lequel les identifiants de fonctions multiples se trouvent sur une ligne le long d'une partie inférieure de l'interface à écran.

8. Terminal selon la revendication 6, comprenant en outre une unité d'obtention de distance (910) destinée à, lorsque le contact est déplacé le long de la trace de geste prédéfinie, obtenir la distance de déplacement du contact ou le rapport entre la distance de déplacement et la trace de geste prédéfinie ;
dans lequel l'unité de contrôle d'affichage est destinée à, sur la base de la distance de déplacement et du rapport, afficher progressivement l'interface de fonction prédéfinie sur l'interface à écran.

9. Terminal selon la revendication 6, dans lequel la trace de geste prédéfinie comprend au moins un trajet qui correspond au au moins un contact, de manière biunivoque.

10. Terminal selon la revendication 6, dans lequel l'interface de fonction prédéfinie est une interface d'application privée, une interface d'accès destinée à des applications privées, ou une interface de sélection destinée à une fonction d'application privée.
